# EUROPÄISCHE PATENTSCHRIFT

(11) **EP 3 054 654 B1**
(45) Veröffentlichungstag und Bekanntmachung des Hinweises auf die Patenterteilung: **10.04.2019**
(21) Anmeldenummer: 16154560.3
(22) Anmeldetag: 05.02.2016
(51) Int. Cl.: H04L 29/12, H04L 29/08, H04L 29/14

(54) **NETZWERKSYSTEM UND VERFAHREN ZUR NAMENSAUFLÖSUNG IN EINEM NETZWERKSYSTEM**
NETWORK SYSTEM AND METHOD FOR NAME RESOLUTION IN A NETWORK SYSTEM
SYSTEME DE RESEAU ET PROCEDE DE RESOLUTION DE NOM DANS UN SYSTEME DE RESEAU

(30) Priorität: 06.02.2015 DE 102015101742
(43) Veröffentlichungstag der Anmeldung: 10.08.2016
(73) Patentinhaber: Bundesdruckerei GmbH, 10969 Berlin (DE)
(72) Erfinder: Niehage, Kevin, 12619 Berlin (DE)
(74) Vertreter: Bittner, Thomas L.

(56) Entgegenhaltungen:
- WO-A1-2012/152765
- US-A1- 2010 223 364
- US-A1- 2013 219 020

## Beschreibung

Die Erfindung betrifft ein Netzwerksystem sowie ein Verfahren zur Namensauflösung in einem Netzwerksystem.

### Hintergrund

Netzwerksysteme sind Datenverarbeitungsanlagen mit in der Regel mehreren Servern, die in Gruppen oder einzeln in verschiedenen Serverstationen örtlich getrennt angeordnet sind. Ein Beispiel für ein solches Netzwerksystem ist das Internet mit einer Vielzahl von Servern, die über eine große Anzahl von Serverstationen weltweit verteilt sind. Wenigstens ein Teil der Server dient der Beantwortung von Anfragen von sogenannten Clients, in Verbindung mit dem Internet insbesondere dem Bereitstellen von Inhalten für Webseiten.

Ein Netzwerksystem wie das Internet kann mit einem sogenannten Domain-Name-System (DNS) ausgestattet sein. Hierbei wird den Servern des Netzwerksystems ein Name zugeordnet. Die Namen geben dem Nutzer der Clients die Möglichkeit, in dem Netzwerksystem eine Anfrage an einen Server unter dem Namen zu stellen, welcher nach dem Domain-Name-System diesem Server zugeordnet ist. Das Domain-Name-System übernimmt dann die Aufgabe, eine Zuordnung zwischen den im Netzwerksystem gültigen Namen und den Netzwerkadressen der Server im Netzwerksystem bereitzustellen. Im Fall des Internets ist auf diese Weise eine Zuordnung zwischen URL (URL - "Uniform Ressource Locator") einerseits und zugehörigen IP-Adressen andererseits bereitgestellt. Die IP-Adresse wird im Netzwerksystem Geräten zugewiesen, die an das Netz angebunden sind, und macht die Geräte so adressierbar und damit erreichbar. Die IP-Adresse kann einen einzelnen Empfänger oder eine Gruppe von Empfängern bezeichnen (Multicast, Broadcast). Umgekehrt können einem Computer mehrere IP-Adressen zugeordnet sein. Bei der IP-Adresse kann es sich zum Beispiel um eine IPv4-Adresse handeln.

Das Domain-Name-System setzt die Namen in Netzwerkadressen um. Geht also von einem Client einer Anfrage mit einem Namen beim Domain-Name-System ein, so bestimmt das DNS, welche Netzwerkadresse dem Namen zugeordnet ist, wobei auch vorgesehen sein kann, ein und demselben Namen mehrere Netzwerkadressen zuzuordnen. Üblicherweise ist mit dem DNS auch eine umgekehrte Auflösung von Netzwerkadressen in Namen möglich.

In Netzwerksystemen, bei denen mehrere voneinander unabhängig erreichbare Standorte existieren, ist es nur schwer möglich, Ausfälle eines kompletten Standorts an die Nutzer des Netzwerksystems zu propagieren. Üblicherweise beginnt die Nutzung des Netzwerksystems mit einer Anfrage an einen DNS-Server, bei dem der Hostname des Systems in die damit verbundene Netzwerk-Adresse übersetzt wird. In Szenarien, bei denen mehrere verteilte Standorte zum Einsatz kommen, gibt es an dieser Stelle zwei Varianten, wie mit Lastverteilung und Standortausfällen umgegangen werden kann.

Es wurde das sogenannte Round-Robin Verfahren vorgeschlagen. Für einen Hostnamen können mehrere Netzwerk-Adressen hinterlegt sein. Die einzelnen Netzwerk-Adressen zeigen in diesem Fall auf die einzelnen Standorte. Gemäß dem Round-Robin Verfahren geben DNS-Server bei der Namensauflösung die Liste der Netzwerk-Adressen in einer zufälligen Reihenfolge zurück. Der Client nutzt meist die erste der zurückgegebenen Adressen. So findet eine Gleichverteilung auf die einzelnen Server statt. Sollte einer der Server-Standorte jedoch ausfallen, wird dessen Netzwerk-Adresse trotzdem weiterhin ausgegeben, sodass bei n Standorten und m ausgefallenen Standorten weiterhin m / n der Anfragen an ausgefallene Standorte mit Servern gerichtet werden.

Weiterhin wurde das sogenannte Global Server Load Balancing (GSLB) vorgeschlagen. Hierbei hält der DNS-Server weiterhin mehrere Netzwerk-Adressen für einen Hostnamen vor und verteilt diese im Round-Robin Verfahren. Darüber hinaus ist jedoch ein Monitoring notwendig. Sollte das Monitoring-System feststellen, dass einer der Standorte nicht erreichbar ist, so wird dessen Eintrag im DNS-Server deaktiviert, bis festgestellt wird, dass die Erreichbarkeit des Standorts wiederhergestellt wurde.

Dokument US 2010/0075626 A1 betrifft ein mobiles Alarmsystem mit redundanten Zellübertragungszentren. Mehrere Zellübertragungszentren sind mit einer Steuerung einer Basisstation oder eines Radionetzwerks verbunden, um Geo-Redundanz und eine hohe Verfügbarkeit bereitzustellen, so dass der Fehler einer der Zellübertragungszentren oder eines Clusters von Zellübertragungszentren keine Unterbrechung des Services bewirkt.

In dem Dokument US 2002/0194335 A1 sind ein Verfahren und eine Vorrichtung offenbart, bei denen ein Lastausgleichsystem einen Client an den Ort führt, welcher am besten in der Lage ist, auf eine Anfrage des Clients zu antworten, wobei eine Kombination von Ausgleichsverfahren zur Anwendung kommt.

Im Dokument US 2008/0189437 A1 werden mehrere getrennte DNS-Zonen kombiniert, um eine zusammengesetzte DNS-Zone zu bilden. Die zusammengesetzte DNS-Zone wird durch andere Elemente des Netzwerks als eine einzelne DNS-Zone gesehen.

Das Dokument US 7,653,700 B1 betrifft ein System und ein Verfahren zum Lastausgleich zwischen global verteilten Servern basierend auf Leistungskriterien. Die Infrastruktur des Systems umfasst Lastausgleichs-Domänennamenserver, die in physischer Nähe zum Präsenzort des Internetserverproviders angeordnet sind.

Das Dokument US 2005/0021848 A1 bezieht sich auf ein System und ein Verfahren zur Lastverteilung zwischen redundanten, unabhängigen Web-Servern. Der Server-Computer antwortet auf eine anfängliche Verbindungsanfrage des Client-Computers mit dem Namen eines Ortes des Server-Computers.

Aus dem Dokument US 2010/0223364 A1 ist ein Netzwerksystem bekannt, bei dem Netzwerckomponenten in mehreren Stationen angeordnet sein können. In einer hierarchischen Struktur sind Netzwerkknoten angeordnet, die jeweils ein DNS-Modul zur Namensauflösung umfassen. Anfragen zur Namensauflösung werden der Hierarchie der Netzwerkknoten entsprechend zwischen diesen weitergereicht.

Auch in den Dokumenten US 2013/0219020 A1 sowie WO 2012/152765 A1 sind Netzwerksysteme beschrieben, bei denen lokale DNS-Server zur Beantwortung von Anfragen zur Namensauflösung vorgesehen sind. Hierbei können Listen mit IP-Adressen zurückgegeben werden, wobei in der Liste IP-Adressen von Servern aus unterschiedlichen Bereichen der Netzwerkstruktur enthalten sein können.

### Zusammenfassung

Aufgabe der Erfindung ist es, ein Netzwerksystem sowie ein Verfahren zur Namensauflösung in einem Netzwerksystem anzugeben, bei dem nachteilige Wirkungen von Serverausfällen auf den Betrieb gemindert oder ganz vermieden sind.

Zur Lösung der Aufgabe sind ein Netzwerksystem nach dem unabhängigen Anspruch 1 sowie ein Verfahren zur Namensauflösung in einem Netzwerksystem nach dem unabhängigen Anspruch 11 geschaffen. Weitere Ausführungsformen sind Gegenstand von abhängigen Unteransprüchen.

Nach einem Aspekt ist ein Netzwerksystem geschaffen, welches Stationen von Netzwerkkomponenten aufweist, die wenigstens örtlich getrennt voneinander gebildet sind und jeweils einen oder mehrere Netzwerkkomponenten, zum Beispiel Host-Server, so dass Serverstationen gebildet sind, sowie einen lokalen autoritativen DNS-Server aufweisen, in welchem für die Netzwerkkomponenten aller Stationen eine Zuordnung der jeweiligen Netzwerkadresse zu einem Namen in einem netzwerkseitigen Namensraum hinterlegt ist. Das Netzwerksystem umfasst weiterhin einen zentralen autoritativen DNS-Server, in welchem eine Delegierung für Anfragen zur Namensauflösung betreffend einen Namen aus dem netzwerkseitigen Namensraum an die lokalen autoritativen DNS-Server hinterlegt ist. Die lokalen autoritativen DNS-Server sind jeweils eingerichtet, sie erreichende Anfragen zur Namensauflösung innerhalb des netzwerkseitigen Namensraums mit einer Auflistung wenigstens eines Teils der dem aufzulösenden Namen zugeordneten Netzwerkadressen zu beantworten, derart, dass die Auflistung die Netzwerkadresse einer lokalen Netzwerckomponente, die mit dem die Anfrage beantwortenden lokalen autoritativen DNS-Server in derselben Station angeordnet ist, und die Netzwerkadresse einer nicht-lokalen Netzwerkkomponente umfasst, die mit dem die Anfrage beantwortenden lokalen autoritativen DNS-Server nicht in derselben Serverstation angeordnet ist, und in der Auflistung stets die Netzwerkadresse der lokalen Netzwerkkomponente im Vergleich zu der Netzwerkadresse der nicht-lokalen Netzwerkkomponente mit höherer Priorität angegeben ist.

Nach einem weiteren Aspekt ist ein Verfahren zur Namensauflösung in einem Netzwerksystem geschaffen. Das Verfahren umfasst die folgenden Schritte:
- Bereitstellen von Stationen von Netzwerkkomponenten, die wenigstens örtlich getrennt voneinander gebildet sind und jeweils eine oder mehrere Netzwerkkomponenten sowie einen lokalen autoritativen DNS-Server aufweisend gebildet werden, in welchem für die Netzwerkkomponenten aller Stationen eine Zuordnung der jeweiligen Netzwerkadresse zu einem Namen in einem netzwerkseitigen Namensraum hinterlegt ist,
- Bereitstellen eines zentralen autoritativen DNS-Servers, in welchem eine Delegierung für Anfragen zur Namensauflösung betreffend einen Namen aus dem netzwerkseitigen Namensraum an die lokalen autoritativen DNS-Server hinterlegt wird, und
- Einrichten der lokalen autoritativen DNS-Server, derart, dass an sie gerichtete Anfragen zur Namensauflösung innerhalb des netzwerkseitigen Namensraums mit einer Auflistung wenigstens eines Teils der dem aufzulösenden Namen zugeordneten Netzwerkadressen zu beantworten werden, wobei die Auflistung die Netzwerkadresse einer lokalen Netzwerkkomponente, die mit dem die Anfrage beantwortenden lokalen autoritativen DNS-Server in derselben Station angeordnet ist, und die Netzwerkadresse einer nicht-lokalen Netzwerkkomponente umfassend gebildet wird, der mit dem die Anfrage beantwortenden lokalen autoritativen DNS-Server nicht in derselben Station angeordnet ist, und dass in der Auflistung stets die Netzwerkadresse der lokalen Netzwerkkomponente im Vergleich zu der Netzwerkadresse der nicht-lokalen Netzwerkkomponente mit höherer Priorität angegeben wird.

Die Auflistung der Netzwerkadresse der lokalen Netzwerkkomponente mit höherer Priorität kann bedeuten, dass stets dessen Netzwerkadresse an erster Stelle in der Auflistung steht. In einer anderen Ausführungsform kann den aufgelisteten Netzwerkadressen jeweils ein Informationsfeld zugeordnet werden, welches eine zugeordnete Priorität anzeigt und von der anfragenden Einrichtung auswertbar ist, insbesondere einem anfragenden Client. Wenn die anfragende Einrichtung die Antwort mit der Auflistung der Netzwerkadressen auswertet, ist so sichergestellt, dass stets die lokale Netzwerkkomponente, für die höhere Priorität mitgeteilt wurde, tatsächlich mit höherer Priorität angefragt wird.

Es wird auf diese Weise die Wahrscheinlichkeit gemindert, dass nach der Namensauflösung die Anfrage an eine Netzwerkkomponente, zum Beispiel einen Host-Server, gerichtet wird, die zeitweise oder dauerhaft nicht zur Verfügung steht für die Beantwortung der Anfrage, beispielsweise wegen eines Offline-Zustandes.

Die lokalen autoritativen DNS-Server können jeweils eingerichtet sein, die an sie gerichteten Anfragen zur Namensauflösung stets mit einer Auflistung aller der dem aufzulösenden Namen zugeordneten Netzwerkadressen von lokalen und nicht-lokalen Netzwerkkomponenten zu beantworten. Bei dieser Ausführung umfasst die im Rahmen der Namensauflösung erstellte Antwort des lokalen autoritativen DNS-Servers stets alle Netzwerkadressen für die Netzwerkkomponenten, die gemäß netzwerkseitigem Namensraum dem angefragten Namen zugeordnet sind.

Die Auflistung kann die Netzwerkadressen mehrerer lokaler Netzwerkkomponenten umfassen, die mit dem die Anfrage beantwortenden lokalen autoritativen DNS-Server in derselben Serverstation angeordnet sind. Bei dieser Ausgestaltung verfügt die Serverstation, deren lokaler autoritativer DNS-Server die Anfrage zur Namensauflösung beantwortet, über mehrere lokale Netzwerkkomponente, die dem angefragten Namen zugeordnet sind. Für alle lokalen Netzwerkkomponenten zeigt die zur Namensauflösung erzeugte Antwort des lokalen autoritativen DNS-Servers eine höhere Priorität an als für die eine oder die mehreren nicht-lokalen Netzwerkkomponenten. Die lokalen autoritativen DNS-Server können eingerichtet sein, eine derartige Prioritätsgewichtung stets und für jede Anfrage zur Namensauflösung in dieser Form zu beantworten. Die höhere Priorisierung der Netzwerkkomponente kann beispielsweise dadurch verwirklicht sein, dass sämtliche lokalen Netzwerkkomponenten in der Auflistung der Netzwerkadressen zuerst stehen, bevor dann die eine oder die mehreren nicht-lokalen Netzwerkkomponenten folgen. Verfügt der beantwortende lokale autoritative DNS-Server über Informationen, dass ein oder mehrere der lokalen Netzwerkkomponenten zum Zeitpunkt der Anfrage nicht betriebsbereit sind, zum Beispiel wegen eines Offline-Status, so kann der lokale autoritative DNS-Server eingerichtet sein, diesen oder diese lokalen Netzwerkkomponenten in der Auflistung wegzulassen.

In der Reihenfolge der aufgelisteten Netzwerkadressen können die Netzwerkadressen sämtlicher lokalen Netzwerkkomponenten im Vergleich zu der Netzwerkadresse der nicht-lokalen Netzwerkkomponente mit höherer Priorität angegeben sein.

Die Reihenfolge der mit höherer Priorität aufgelisteten Netzwerkadressen der lokalen Netzwerckomponenten kann nach einem der folgenden Ordnungsprinzipien ausgebildet sein: zyklisch, zufällig und fest. Ein zyklisches Ordnungsprinzip kann bedeuten, dass die lokalen Netzwerckomponenten der Reihe nach jeweils einmal mit höchster Priorität gelistet werden. Eine feste Vorgabe kann bedeuten, dass stets für ein und dieselben Netzwerkkomponente die höchste Priorität angezeigt wird. Ein bestimmtes Ordnungsprinzip kann für einen begrenzten Zeitraum oder dauerhaft verwirklicht sein. Nutzbar ist auch das Round-Robin Verfahren, welches als solches in verschiedenen Ausgestaltungen bekannt ist. Hiermit kann auf der Ebene des netzwerkseitigen Namenraums eine Lastverteilung zwischen den Netzwerkkomponenten verwirklicht werden.

Die Auflistung kann die Netzwerkadressen mehrerer nicht-lokaler Netzwerkkomponenten umfassen, die mit dem die Anfrage beantwortenden lokalen autoritativen DNS-Server nicht in derselben Serverstation angeordnet sind. Bei dieser Ausgestaltung können sämtliche lokalen Netzwerkkomponenten mit höherer Priorität als die nicht-lokalen Netzwerkkomponenten aufgelistet werden.

Die Reihenfolge der aufgelisteten Netzwerkadressen der nicht-lokalen Netzwerkkomponenten kann nach einem der folgenden Ordnungsprinzipien ausgebildet sein: zyklisch, zufällig und fest. Es gelten die oben in Verbindung mit den Ordnungsprinzipien zur Reihenfolge der lokalen Netzwerkkomponenten gemachten Ausführungen entsprechend.

Die lokalen autoritativen DNS-Server können jeweils eingerichtet sein, vor dem Beantworten von Anfragen zur Namensauflösung zu bestimmen, zumindest für die eine oder die mehreren lokalen Netzwerkkomponenten, ob eine Information zur Betriebsbereitschaft vorliegt, und die Netzwerkadresse einer Netzwerkkomponente nur in die Auflistung aufzunehmen, wenn das Vorliegen der Information zur Betriebsbereitschaft bestimmt wird. Der lokale autoritative DNS-Server verfügt auf diese Weise über Informationen betreffend die Betriebsbereitschaft zumindest der lokalen Netzwerkkomponenten und nutzt diese Informationen beim Beantworten der Anfrage zur Namensauflösung. Eine fehlende Betriebsbereitschaft kann beispielsweise bedeuten, dass die Netzwerkkomponente im Offline-Status ist. Ein solcher Status kann zeitlich begrenzt oder dauerhaft vorliegen, wobei die Information hierüber ebenfalls im lokalen autoritativen DNS-Server vorliegen kann, so dass dies beim Auflisten der Netzwerkadressen zur Beantwortung der Frage zur Namensauflösung berücksichtigt werden kann.

Die eine oder die mehreren Netzwerkkomponenten können Host-Server umfassen. Die lokalen autoritativen DNS-Server können dann jeweils eingerichtet sein, sie erreichende Anfragen zur Namensauflösung innerhalb des netzwerkseitigen Namensraums mit einer Auflistung wenigstens eines Teils der dem aufzulösenden Namen zugeordneten Netzwerkadressen zu beantworten, derart, dass die Auflistung die Netzwerkadresse eines lokalen Host-Servers, der mit dem die Anfrage beantwortenden lokalen autoritativen DNS-Server in derselben Station angeordnet ist, und die Netzwerkadresse eines nicht-lokalen Host-Servers umfasst, der mit dem die Anfrage beantwortenden lokalen autoritativen DNS-Server nicht in derselben Station angeordnet ist, und in der Auflistung stets die Netzwerkadresse des lokalen Host-Servers im Vergleich zu der Netzwerkadresse des nicht-lokalen Host-Servers mit höherer Priorität angegeben ist.

Die eine oder die mehreren Netzwerkkomponenten können für eine oder mehrere der Stationen einen jeweiligen lokaler Lastverteiler umfassen. Der lokale Lastverteiler kann in einer Ausgestaltung innerhalb einer Station die Verfügbarkeit nachgelagerter Netzwerkkomponenten, beispielsweise Host-Server, ermitteln und Anfragen auf mehrere verfügbare, nachgelagerte Netzwerckomponenten verteilen oder im Zuge der Nichtverfügbarkeit einer nachgelagerten Netzwerkkomponente Anfragen an eine andere, verfügbare nachgelagerte Netzwerkkomponenten umleiten. Dem jeweiligen lokalen Lastverteiler ("load balancer") können jeweils ein oder mehrere Host-Server nachgeschaltet sein. Die lokalen autoritativen DNS-Server können dann jeweils eingerichtet sein, sie erreichende Anfragen zur Namensauflösung innerhalb des netzwerkseitigen Namensraums mit einer Auflistung wenigstens eines Teils der dem aufzulösenden Namen zugeordneten Netzwerkadressen zu beantworten, derart, dass die Auflistung die Netzwerkadresse einer lokalen Lastverteileinrichtung, der mit dem die Anfrage beantwortenden lokalen autoritativen DNS-Server in derselben Station angeordnet ist, und die Netzwerkadresse einer nicht-lokalen Lastverteileinrichtung umfasst, der mit dem die Anfrage beantwortenden lokalen autoritativen DNS-Server nicht in derselben Station angeordnet ist, und in der Auflistung stets die Netzwerkadresse des lokalen Lastverteilers im Vergleich zu der Netzwerkadresse des nicht-lokalen Lastverteilers mit höherer Priorität angegeben ist.

Im Zusammenhang mit dem Verfahren zur Namensauflösung in einem Netzwerksystem können die voran beschriebenen Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines Netzwerksystems mit mehreren Serverstationen, die jeweils über einen lokalen autoritativen DNS-Server sowie wenigstens einen lokalen Host-Server verfügen,
- Fig. 2: eine schematische Darstellung eines Ablaufdiagramms für ein Verfahren zur Namensauflösung in dem Netzwerksystem und
- Fig. 3: eine schematische Darstellung eines Netzwerksystems mit mehreren Stationen, die jeweils über einen lokalen autoritativen DNS-Server verfügen und bei denen lokale Host-Server einer lokalen Lastverteilereinrichtung nachgelagert sind.

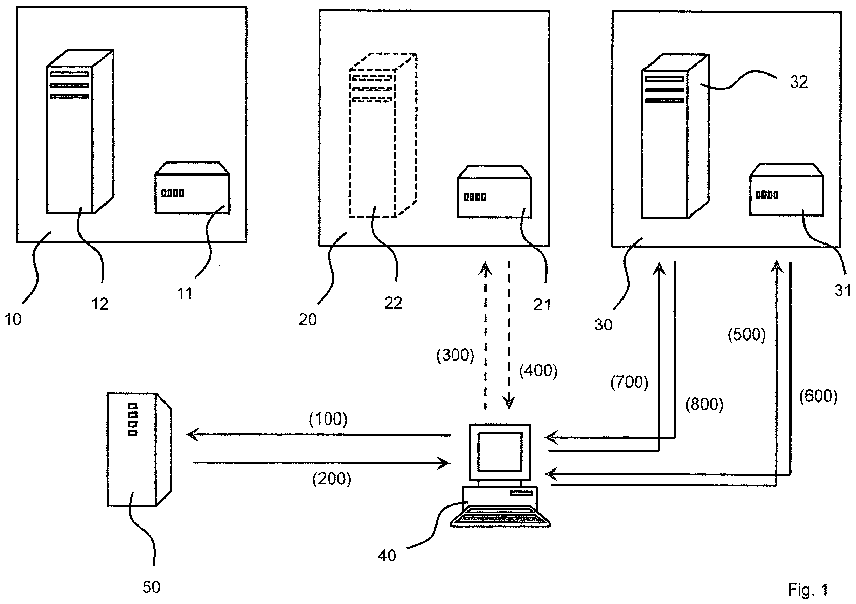

Fig. 1 zeigt eine schematische Darstellung eines Netzwerksystems mit drei örtlich getrennten Stationen 10, 20, 30 die jeweils einen lokalen autoritativen DNS-Server 11, 21, 31 aufweisen. Die lokalen DNS-Server 11, 21, 31 sind autoritativ für die jeweilige Serverstation 10, 20, 30, welche insoweit jeweils eine Domäne eines Namensraums des Netzwerksystems bilden kann. In einem übergeordneten autoritativen DNS-Server 50 sind Delegierungsinformationen hinterlegt, dahingehend, dass auf Anfragen zur Namensauflösung von einem Client 40 über die Delegierung der Namensauflösung an die lokalen autoritativen DNS-Server 11, 21, 31 informiert wird. Der übergeordnete autoritative DNS-Server 50 kann auch als sogenannter "primary DNS" (primärer DNS-Server) bezeichnet werden.

Die getrennten Serverstationen 10, 20, 30 verfügen gemäß Fig. 1 weiterhin jeweils über einen lokalen Host-Server 12, 22, 32. In anderen Ausgestaltungen (nicht dargestellt) können in einer oder mehreren der Serverstationen 10, 20, 30 auch mehrere Host-Server vorgesehen sein, die insoweit dann ebenfalls Bestandteil der lokalen Domäne sind, für die der jeweilige lokale autoritative DNS-Server 11, 21, 31 zuständig ist.

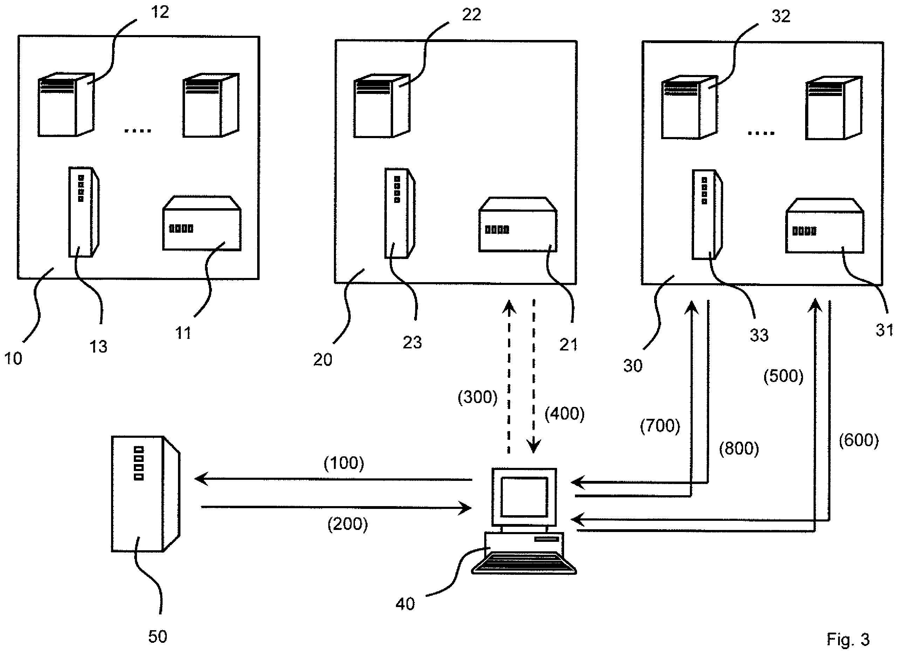

In anderen Ausführungen kann es sich bei den Serverstationen 10, 20, 30 allgemein um örtlich getrennte Stationen mit einer oder mehreren Netzwerkkomponenten handeln. In den Stationen können lokale Host-Server einer Lastverteileinrichtung nachgelagert sein (vgl. auch Fig. 3 unten).

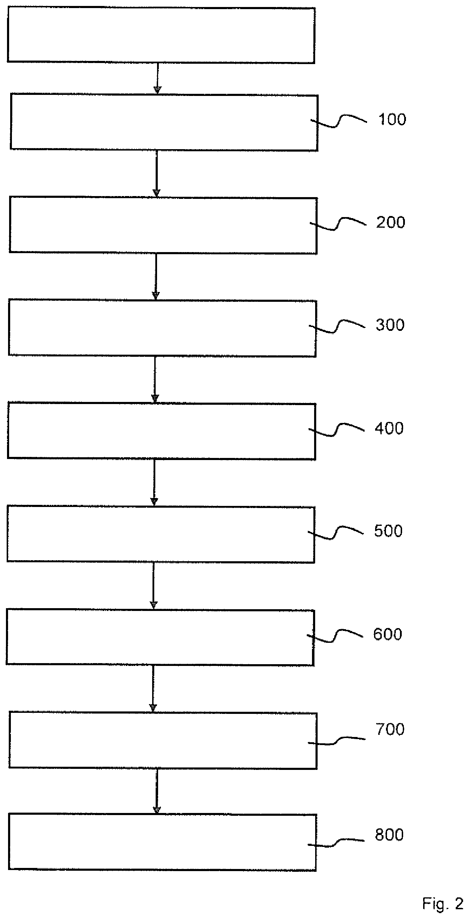

Unter Bezugnahme auf Fig. 1 sowie Fig. 2, welche schematisch ein Ablaufdiagramm zeigt, wird nachfolgend eine Ausgestaltung eines Verfahrens zur Namensauflösung in dem Netzwerksystem erläutert.

In einem ersten Schritt 100 versucht ein Client 40, den netzwerkseitigen Namen eines Dienstes, der durch die örtlich getrennten Serverstation 10, 20, 30 bereitgestellt wird, vom autoritativen DNS-Server 50 in die zugeordnete Netzwerkadresse überführen zu lassen. Der übergeordnete autoritative DNS-Server 50 antwortet mit der Information über die Delegierung der Funktion der Namensauflösung an die lokalen autoritativen DNS-Server 11, 21, 31: "DNS Delegation: DNS 21, DNS 31, DNS 11" (Schritt 200). Dieser Reihenfolge entsprechend stellt der Client 40 seine Anfrage zur Namensauflösung nun zunächst an den lokalen autoritativen DNS-Server 21 (Schritt 300). Die Serverstation 20 ist nicht betriebsbereit, beispielsweise aufgrund eines Offline-Status, was in Fig. 1 mittels gestrichelter Linie dargestellt ist. Der Client 40 stellt also fest, dass seine Anfrage zur Namensauflösung fehlschlägt (Schritt 400). Der DNS-Delegierungsinformation entsprechend stellt der Client 40 seine Anfrage nun an den lokalen autoritativen DNS-Server 31, welcher betriebsbereit ist und die Anfrage zur Namensauflösung beantwortet (Schritte 500, 600). Bei dem dargestellten Ausführungsbespiel gibt der lokale autoritative DNS-Server 31 eine Liste mit den Netzwerkadressen der Host-Server, 12, 22, 32 zurück. In der Antwort erhält die höchste Priorität der zu dem antwortenden lokalen autoritativen DNS-Server 31 lokale Host-Server 32. Dieser, also insbesondere dessen Netzwerkadresse, wird in der Antwort mit höherer Priorität angegeben als die in Bezug auf den lokalen autoritativen DNS-Server 31 nicht-lokalen Host-Server 12, 22 in den örtlich getrennten Serverstationen 10, 20.

In Auswertung dieser Antwort stellt der Client 40 seine eigentliche inhaltliche Anfrage nun an die Netzwerkadresse des lokalen Host-Servers 32, welcher in der namensauflösenden Antwort die höchste Priorität hat (Schritt 700). Der lokale Host-Server 32 beantwortet hierauf im Schritt 800 die Anfrage, zum Beispiel mittels Übersenden eines angefragten Webseiten-Inhaltes.

Bei dem beschriebenen Verfahren erhalten stets die Netzwerkadressen der lokalen Host-Server die höchste Priorität in der namensauflösenden Antwort.

Das vorgeschlagene Verfahren kann die Mechanismen des DNS-Systems nutzen, um sowohl Lastverteilung als Ausfallsicherheit zu verbessern. Jeder der Serverstationen 10, 20, 30 (Standorte), für die das Verfahren genutzt werden soll, erhält seinen eigenen DNS-Server 11, 21, 31. Alle diese DNS-Server 11, 21, 31 werden als Quellen für die DNS-Zone oder - Domäne definiert. Die lokalen autoritativen DNS-Server 11, 21, 31, die in den einzelnen Standorten stehen, enthalten die tatsächlichen Einträge für die bereitgestellten Hostnamen. Bei Anfragen an die lokalen autoritativen DNS-Server 11, 21, 31 in den einzelnen Standorten werden die Antworten derart gegeben, dass die erste Netzwerkadresse in der Antwort immer der Netzwerkadresse des Host-Servers am aktuellen Standort entspricht.

Dies bedingt, dass der Client 40, dessen DNS-Anfrage von einem erreichbaren Standort beantwortet wurde, auch an diesen erreichbaren Standort seine eigentliche Serviceanfrage stellen wird. Hierfür werden sowohl die Lastverteilungs- als auch die Failover-Funktionen des DNS-Systems nachgenutzt. Dies bietet Vorteile gegenüber dem Round-Robin Verfahren als solchem und dem GSLB-Verfahren.

Das vorgeschlagene Verfahren hat gegenüber dem Round-Robin Verfahren als solchem den Vorteil, dass Dienstanfragen nur an erreichbare Standorte gestellt werden. DNS-Anfragen für auf dem Client 40 ausgeführte Anwendungen werden transparent und mit Hilfe der Ausfallsicherheit des DNS-Protokolls durch den lokalen DNS-Server einer der verfügbaren Serverstationen beantwortet. Dies wird mittels Failover-Funktion des DNS-Systems sichergestellt. Die Methodik des Round-Robin Verfahrens kann genutzt werden, um eine gleichmäßige Lastverteilung auf die einzelnen Standorte zu erreichen.

Das vorgeschlagene Verfahren in Verbindung mit der Ausgestaltung nach Fig. 1 kann den Vorteil bieten, dass keine Änderungen an der Infrastruktur außerhalb der Standorte notwendig sind. Es muss keine Monitoring-Infrastruktur aufgebaut werden und auch der externe, primäre DNS-Server 50 muss kein GSLB unterstützen. In diesem müssen lediglich Name-Service-Resource-Records (NS-RRs) für die DNS-Server 11, 21, 31 in den einzelnen Standorten hinterlegt werden.

Fig. 3 zeigt eine schematische Darstellung eines anderen Netzwerksystems. Für gleiche Merkmale werden die gleichen Bezugszeichen wie in Fig. 1 verwendet. In den mehreren Stationen 10, 20, 30 ist jeweils ein lokaler autoritativer DNS-Server 11, 21, 31 vorgesehen. Die lokalen Host-Server 12, 22, 32 sind jeweils einer lokalen Lastverteilereinrichtung 13, 23, 33 nachgelagert. Hiermit kann die Lastverteilung, zum Beispiel die Verteilung der erhaltenen Anfragen, auf die lokalen Server 12, 22, 32 gesteuert werden.

Aus Sicht des Clients 40 ändert sich bei der Ausgestaltung nach Fig. 3, dass der lokale DNS-Server 31 bei der delegierten DNS-Anfrage nicht die Netzwerkadressen der lokalen und nicht-lokalen Host-Server 12, 22, 32 als Antwort zurückliefert, sondern die Netzwerkadressen der lokalen und nicht-lokalen Lastverteileinrichtungen 13, 23, 33, wobei die Netzwerkadresse der lokalen Lastverteileinrichtung im Vergleich zu den Netzwerkadressen der nicht-lokalen Lastverteilungen mit höherer Priorität angegeben ist (Schritt 600). Anschließend baut der Client 40 im Schritt 700 eine Verbindung zur lokalen Lastverteileinrichtung 33 auf. Diese beantwortet die Anfrage des Clients 40 nicht direkt, sondern leitet diese an eine der lokalen Host-Server 32 weiter, wobei die lokale Lastverteileinrichtung regelmäßig die Verfügbarkeit der lokalen Host-Server 32 prüfen kann, um die Weiterleitung von Anfragen an lokale, nicht verfügbare Host-Server zu vermeiden. Abschließend nimmt die lokale Lastverteileinrichtung 33 die Antwort des lokalen Host-Servers 32 entgegen und leitet diese an den Client 40 weiter (Schritt 800).

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Netzwerksystem, mit
- Stationen von Netzwerkkomponenten (10, 20, 30), die wenigstens örtlich getrennt voneinander gebildet sind und jeweils eine oder mehrere Netzwerkkomponenten (12, 22, 32) sowie einen lokalen autoritativen DNS-Server (11, 21, 31) aufweisen, in weichem für die Netzwerkkomponenten (12, 22, 32) aller Stationen (10, 20, 30) eine Zuordnung der jeweiligen Netzwerkadresse zu einem Namen in einem netzwerkseitigen Namensraum hinterlegt ist, und
- einem zentralen autoritativen DNS-Server (50), in welchem eine Delegierung für Anfragen zur Namensauflösung betreffend einen Namen aus dem netzwerkseitigen Namensraum an die lokalen autoritativen DNS-Server (11, 21, 31) hinterlegt ist,
**dadurch gekennzeichnet, dass** die lokalen autoritativen DNS-Server (11, 21, 31) jeweils eingerichtet sind, an sie gerichtete Anfragen zur Namensauflösung innerhalb des netzwerkseitigen Namensraums mit einer Auflistung wenigstens eines Teils der dem aufzulösenden Namen zugeordneten Netzwerkadressen zu beantworten, derart, dass
- die Auflistung die Netzwerkadresse einer lokalen Netzwerkkomponente, die mit dem die Anfrage beantwortenden lokalen autoritativen DNS-Server (11, 21, 31) in derselben Station angeordnet ist, und die Netzwerkadresse einer nicht-lokalen Netzwerkkomponente umfasst, der mit dem die Anfrage beantwortenden lokalen autoritativen DNS-Server (11, 21, 31) nicht in derselben Station (10, 20, 30) angeordnet ist, und
- in der Auflistung stets die Netzwerkadresse der lokalen Netzwerkkomponente im Vergleich zu der Netzwerkadresse der nicht-lokalen Netzwerkkomponente mit höherer Priorität angegeben ist.

2. Netzwerksystem nach Anspruch 1, **dadurch gekennzeichnet, dass** die lokalen autoritativen DNS-Server (11, 21, 31) jeweils eingerichtet sind, die an sie gerichteten Anfragen zur Namensaufläsung stets mit einer Auflistung aller der dem aufzulösenden Namen zugeordneten Netzwerkadressen von lokalen und nicht-lokalen Netzwerkkomponenten zu beantworten.

3. Netzwerksystem nach Anspruch 1 oder 2, **dadurch gekennzeichnet, dass** die Auflistung die Netzwerkadressen mehrerer lokaler Netzwerkkomponenten umfasst, die mit dem die Anfrage beantwortenden lokalen autoritativen DNS-Server (11, 21, 31) in derselben Station (10, 20, 30) angeordnet sind.

4. Netzwerksystem nach Anspruch 2 oder 3, **dadurch gekennzeichnet, dass** in der Reihenfolge der aufgelisteten Netzwerkadressen die Netzwerkadressen sämtlicher lokaler Netzwerkkomponenten im Vergleich zu der Netzwerkadresse der nicht-lokalen Netzwerkkomponente mit höherer Priorität angegeben sind.

5. Netzwerksystem nach Anspruch 4, **dadurch gekennzeichnet, dass** die Reihenfolge der mit höherer Priorität aufgelisteten Netzwerkadressen der lokalen Netzwerkkomponenten nach einem der folgenden Ordnungsprinzipien ausgebildet ist: zyklisch, zufällig und fest.

6. Netzwerksystem nach mindestens einem der vorangehenden Ansprüche, **dadurch gekennzeichnet, dass** die Auflistung die Netzwerkadressen mehrerer nicht-lokaler Netzwerkkomponenten umfasst, die mit dem die Anfrage beantwortenden lokalen autoritativen DNS-Server nicht in derselben Station angeordnet sind.

7. Netzwerksystem nach Anspruch 6, **dadurch gekennzeichnet, dass** die Reihenfolge der aufgelisteten Netzwerkadressen der nicht-lokalen Netzwerkkomponenten nach einem der folgenden Ordnungsprinzipien ausgebildet ist: zyklisch, zufällig und fest.

8. Netzwerksystem nach mindestens einem der vorangehenden Ansprüche, **dadurch gekennzeichnet, dass** die lokalen autoritativen DNS-Server (11, 21, 31)jeweils eingerichtet sind, vor dem Beantworten von Anfragen zur Namensauflösung zu bestimmen, zumindest für die eine oder die mehreren lokalen Netzwerkkomponenten (12, 22, 32), ob eine Information zur Betriebsbereitschaft vorliegt, und die Netzwerkadresse einer Netzwerkkomponente nur in die Auflistung aufzunehmen, wenn das Vorliegen der Information zur Betriebsbereitschaft bestimmt wird.

9. Netzwerksystem nach mindestens einem der vorangehenden Ansprüche, **dadurch gekennzeichnet, dass** die eine oder die mehreren Netzwerkkomponenten Host-Server (12, 22, 32) umfassen.

10. Netzwerksystem nach mindestens einem der vorangehenden Ansprüche, **dadurch gekennzeichnet, dass** die eine oder die mehreren Netzwerkkomponenten lokale Lastverteiler (13, 23, 33) umfassen.

11. Verfahren zum Bereitstellen eines Netzwerksystems mit Funktionalität zur Namensauflösung, wobei das Verfahren die folgenden Schritte aufweist:
- Bereitstellen von Stationen von Netzwerkkomponenten (10, 20, 30), die wenigstens örtlich getrennt voneinander gebildet sind und jeweils eine oder mehrere Netzwerkkomponenten (12, 22, 32) sowie einen lokalen autoritativen DNS-Server (11, 21, 31) aufweisend gebildet werden, in welchem für die Netzwerkkomponenten (12, 22, 32) aller Stationen (10, 20, 30) eine Zuordnung der jeweiligen Netzwerkadresse zu einem Namen in einem netzwerkseitigen Namensraum hinterlegt ist, und
- Bereitstellen eines zentralen autoritativen DNS-Servers (50), in welchem eine Delegierung für Anfragen zur Namensaufläsung betreffend einen Namen aus dem netzwerkseitigen Namensraum an die lokalen autoritativen DNS-Server (11, 21, 31) hinterlegt wird,
**gekennzeichnet durch** Einrichten der lokalen autoritativen DNS-Server (11, 21, 31), derart, dass diese an sie gerichtete Anfragen zur Namensaufläsung innerhalb des netzwerkseitigen Namensraums mit einer Auflistung wenigstens eines Teils der dem aufzulösenden Namen zugeordneten Netzwerkadressen beantworten, derart, dass
- die Auflistung die Netzwerkadresse einer lokalen Netzwerkkomponente, die mit dem die Anfrage beantwortenden lokalen autoritativen DNS-Server (11, 21, 31) in derselben Station angeordnet ist, und die Netzwerkadresse einer nicht-lokalen Netzwerkkomponente umfassend gebildet wird, der mit dem die Anfrage beantwortenden lokalen autoritativen DNS-Server (11, 21, 31) nicht in derselben Station (10, 20, 30) angeordnet ist, und
- in der Auflistung stets die Netzwerkadresse der lokalen Netzwerkkomponente im Vergleich zu der Netzwerkadresse der nicht-lokalen Netzwerkkomponente mit höherer Priorität angegeben wird.

## Claims

1. A network system comprising
- stations of network components (10, 20, 30) which are formed at least locally separate from one another and each comprise one or multiple network components (12, 22, 32) and a local authoritative DNS server (11, 21, 31), in which for the network components (12, 22, 32) of all stations (10, 20, 30) an assignment of the respective network address is stored for a name in a network-side name space, and
- a central authoritative DNS server (50), in which a delegation for requests for name resolution relating to a name from the network side name space to the local authoritative DNS servers (11, 21, 31) is stored,
**characterized in that** the local authoritative DNS servers (11, 21, 31) are each set up to answer requests made to them for name resolution within the network-side name space with a list of at least part of the network addresses associated with the name to be resolved, in such a manner that
- the list comprises the network address of a local network component which is arranged in the same station with the local authoritative DNS server (11, 21, 31) answering the request and the network address of a non-local network component which is not arranged in the same station (10, 20, 30) with the local authoritative DNS server (11, 21, 31) answering the request, and
- in the list, the network address of the local network component is always indicated with higher priority in comparison to the network address of the non-local network component.

2. The network system according to claim 1, **characterized in that** the local authoritative DNS servers (11, 21, 31) are each set up always to answer the name resolution requests made to them with a list of all network addresses of local and non-local network components assigned to the name to be resolved.

3. The network system according to claim 1 or 2, **characterized in that** the list comprises the network addresses of multiple local network components which are arranged in the same station (10, 20, 30) with the local authoritative DNS server (11, 21, 31) answering the request.

4. The network system according to claim 2 or 3, **characterized in that**, in the order of network addresses listed, the network addresses of all local network components are indicated with higher priority in comparison to the network address of the non-local network component.

5. The network system according to claim 4, **characterized in that** the order of the network addresses of the local network components listed with higher priority is configured according to one of the following ordering principles: cyclical, random and fixed.

6. The network system according to at least one of the preceding claims, **characterized in that** the list comprises the network addresses of multiple non-local network components which are not arranged in the same station with the local authoritative DNS server answering the request.

7. The network system according to claim 6, **characterized in that** the order of the listed network addresses of the non-local network components is configured according to one of the following ordering principles: cyclical, random and fixed.

8. The network system according to at least one of the preceding claims, **characterized in that** the local authoritative DNS servers (11, 21, 31) are each set up to determine, prior to replying to name resolution requests, at least for the one or more local network components (12, 22, 32), whether information is available on operational readiness, and only to include the network address of a network component in the list when the presence of the information on operational readiness is determined.

9. The network system according to at least one of the preceding claims, **characterized in that** the one or multiple network components comprise host servers (12, 22, 32).

10. The network system according to at least one of the preceding claims, **characterized in that** the one or multiple network components comprise local load distributors (13, 23, 33).

11. A method of providing a network system with name resolution functionality, said method comprising the following steps:
- providing stations of network components (10, 20, 30) which are formed at least locally separate from one another and each are formed comprising one or multiple network components (12, 22, 32) and a local authoritative DNS server (11, 21, 31), in which for the network components (12, 22, 32) of all stations (10, 20, 30) an assignment of the respective network address is stored for a name in a network-side name space and
- providing a central authoritative DNS server (50) in which a delegation for requests for name resolution relating to a name from the network-side name space to the local authoritative DNS servers (11, 21, 31) is stored,
**characterized by** configuring the local authoritative DNS servers (11, 21, 31) in such a manner that they answer the requests made to them for name resolution within the network-side name space with a list of at least part of the network addresses associated with the name to be resolved, in such a manner that
- the list is formed comprising the network address of a local network component, which is arranged in the same station with the local authoritative DNS server (11, 21, 31) answering the request, and the network address of a non-local network component, which is not arranged in the same station (10, 20, 30) with the local authoritative DNS server (11, 21, 31) answering the request, and
- in the list, the network address of the local network component is always indicated with higher priority in comparison to the network address of the non-local network component.

## Revendications

1. Système de réseau, comprenant :
- des stations de composants de réseau (10, 20, 30), qui sont formées en étant au moins séparées localement les unes des autres et présentent respectivement un ou plusieurs composants de réseau (12, 22, 32) ainsi qu'un serveur DNS local faisant autorité (11,21,31), dans lequel pour les composants de réseau (12, 22, 32) de toutes les stations (10, 20, 30) une affectation de l'adresse de réseau respective à un nom dans un espace de nom du côté du réseau est déposée et
- un serveur DNS central faisant autorité (50), dans lequel une délégation pour des requêtes de résolution de nom concernant un nom provenant de l'espace de nom du côté du réseau est déposée sur le serveur DNS local faisant autorité (11, 21, 31),
**caractérisé en ce que** le serveur DNS local faisant autorité (11, 21, 31) est respectivement conçu afin de répondre aux demandes qui lui sont adressées de résolution de nom à l'intérieur de l'espace de nom du côté du réseau avec un listage d'au moins une partie des adresses de réseau affectées à résoudre de telle sorte que
- le listage comprend les adresses de réseau d'un composant de réseau local qui est disposé dans la même station que le serveur DNS (11, 21, 31) local faisant autorité répondant aux requêtes, et comprend l'adresse de réseau d'un composant de réseau non local, qui n'est pas disposé dans la même station (10, 20, 30) que le serveur DNS (11, 21, 31) local faisant autorité répondant à la requête, et
- dans le listage les adresses de réseau des composants de réseaux locaux sont constamment énoncées en comparaison avec l'adresse de réseau des composants de réseaux non locaux avec priorité plus haute.

2. Système de réseau selon la revendication 1, **caractérisé en ce que** les serveurs DNS locaux faisant autorité (11, 21, 31) sont respectivement conçues afin de répondre aux requêtes qui leur sont adressées de résolution de nom constamment avec un listage de toutes les adresses de réseau affectées au nom à résoudre par le composant de réseaux locaux ou non locaux.

3. Système de réseau selon la revendication 1 ou 2, **caractérisé en ce que** le listage prend les adresses de réseau de plusieurs composants de réseaux locaux, qui sont disposés dans la même station (10, 20, 30) que le serveur DNS (11, 21, 31) local faisant autorité répondant aux requêtes.

4. Système de réseau selon la revendication 2 ou 3, **caractérisé en ce que** dans la séquence des adresses de réseau listées, les adresses de réseau de tous les composants de réseau sont énoncées en comparaison avec l'adresse de réseau des composants de réseaux non locaux avec priorité plus haute.

5. Système de réseau selon la revendication 4, **caractérisé en ce que** la séquence des adresses de réseau listées avec priorité plus haute des composants de réseaux locaux est conçue selon un des principes régulateurs suivants : cyclique, aléatoire et fixe.

6. Système de réseau selon au moins une des revendications précédentes, **caractérisé en ce que** le listage des adresses de réseau comprend plusieurs composants de réseaux non locaux qui ne sont pas disposés dans la même station que le serveur DNS local faisant autorité répondant à la requête.

7. Système de réseau selon la revendication 6, **caractérisé en ce que** la fréquence des adresses de réseau listées des composants de réseaux non locaux est conçue selon un des principes régulateurs suivants : cyclique, aléatoire et fixe.

8. Système de réseau selon au moins une des revendications précédentes, **caractérisé en ce que** les serveurs DNS locaux faisant autorité (11, 21, 31) sont respectivement conçus afin de déterminer avant la réponse aux requêtes de résolution de nom au moins pour un ou plusieurs composants de réseaux locaux (12, 22, 32), si une information de disponibilité opérationnelle est présente et adopter les adresses de réseau d'un composant de réseau dans le listage seulement lorsque la présence de l'information de disponibilité opérationnelle est déterminée.

9. Système de réseau selon au moins une des revendications précédentes, **caractérisé en ce que** un ou plusieurs composants de réseau comprennent un serveur hôte (12, 22, 32).

10. Système de réseau selon au moins une des revendications précédentes, **caractérisé en ce que** un ou plusieurs composants de réseau comprennent un répartiteur de charge (13, 23, 33).

11. Procédé de fourniture d'un système de réseau avec fonctionnalité de résolution du nom, dans lequel le procédé présente les étapes suivantes consistant à :
- fournir des stations de composants de réseaux (10, 20, 30), qui sont formées en étant au moins séparées localement les unes des autres et en présentant respectivement un ou plusieurs composants de réseaux (12, 22, 32) ainsi qu'un serveur DNS local faisant autorité (11, 21, 31), dans lequel pour les composants de réseau (12, 22, 32) de toutes les stations (10, 20, 30) une affectation de l'adresse de réseau respective à un nom dans un espace de nom du côté du réseau est déposée, et
- fournir un serveur DNS central faisant autorité (50), dans lequel une délégation pour les requêtes de résolution de nom concernant un nom provenant de l'espace de nom du côté du réseau est déposée sur le serveur DNS local faisant autorité (11, 21, 31),
**caractérisé par** la configuration du serveur DNS local faisant autorité (11, 21, 31) de telle sorte que ce dernier réponde aux requêtes qui lui sont adressées de résolution de nom à l'intérieur de l'espace de nom du côté du réseau avec un listage d'au moins une partie des adresses de réseau affectées au nom à résoudre, de telle sorte que
- le listage comprend les adresses de réseau d'un composant de réseau local qui est disposé dans la même station que le serveur DNS (11, 21, 31) local faisant autorité répondant aux requêtes, et comprend l'adresse de réseau d'un composant de réseau non local, qui n'est pas disposé dans la même station (10, 20, 30) que le serveur DNS (11, 21, 31) local faisant autorité répondant à la requête, et
- dans le listage les adresses de réseau des composants de réseaux locaux sont constamment énoncées en comparaison avec l'adresse de réseau des composants de réseaux non locaux avec priorité plus haute.
